# EUROPEAN PATENT APPLICATION

(11) **EP 2 053 215 A1**
(43) Date of publication of application: **29.04.2009**
(21) Application number: 07790815.0
(22) Date of filing: 16.07.2007
(51) Int. Cl.: F02B 75/02, F02B 25/00, F02D 13/02, F02D 21/08, F02M 25/07

(54) **EXHAUST CATALYST CONTROL FOR SIX-CYCLE ENGINE**

(30) Priority: 18.08.2006 JP 2006248694
(71) Applicant: Joho Corporation, Shinjuku-ku Tokyo 169-0073 (JP)
(72) Inventor: OOYAMA, Kazuo, Shinjuku-ku Tokyo 161-0033 (JP)
(74) Representative: Hands, Lewis Roger
(86) International application number: PCT/JP2007/064035
(87) International publication number: WO 2008/020519

(57) **Abstract**

A six-cycle engine has the advantage for the capability of internal cooling with scavenging air. This advantage enables the compressive ratio to rise, thereby achieving lower fuel consumption. However, there has been a critical problem due to lowered temperature of the exhaust catalyst and excessive volume of oxygen contained therein caused by the mixing of the scavenging air with exhaust gas. To solve the problem of lowered temperature, the invention has thermally insulated the fuel combustion chamber and the exhausting system, and controlled the aperture degree of the scavenging port valve relatively to the suction valve to adjust the scavenging air volume against the suction air, thereby controlling temperature of the exhaust gas. Further, to solve the problem of excessive volume of oxygen, the invention has introduced an EGR (Exhaust Gas Recirculation) system to fully substitute the scavenging air with circulating exhaust gas and a self EGR system to open the exhaust valve during the scavenging air introduction stroke. The present invention has successfully made a naturally good fuel-efficient six-cycle internal combustion engine be suited one for practical use such as conventional vehicles.

## Description

The present invention relates to a method and a system for controlling actual condition of an exhaust catalyst installed in a six-cycle engine.

There is a known premix combustion type six-cycle engine consisting of a fuel feeding device, an suction port that feeds air-fuel mixture, and a scavenging port that solely feeds fresh air thereto (Refer to the Reference Japanese Patent Publication 1 for example). Further, there is a known method for operating a six-cycle engine that does not have the scavenging air feeding port, but opens an exhaust valve and introduce exhaust gas therein at scavenging introduction stroke. There is a known fact proving that the this method was practically applied to fuel saving competition vehicles and enabled them to score satisfactory results as cited in a non-patent technical literature 1 listed below for example.

There are a variety of known types in the variable valve timing mechanism that is operated via switching of a cam that drives the valve in response to the operating condition of an engine as cited in the Reference Japanese Patent Publication 2 for example.

The continuously variable valve timing mechanism serves as a substitute for a throttle valve. It is well known that this mechanism makes pumping loss be lowered as cited in the Reference Japanese Patent Publication 2 for example.

Reference Japanese Patent Publications:
1: Laid-Open Japanese Utility Model HEISEI-2-96435 (1990)
2: Laid-Open Japanese Patent HEISEI-5-179913 (1993)
3: Laid-Open Japanese Patent SHOWA-55-137305 (1980)
   (From page 9 to page 10)
Non-Patent Technical Literature 1:
   Automobile Technology, 2004, Vol. 58, No. 10, page 27

Any of conventional six-cycle engines features its capability to lower temperature of the fuel combustion chamber due to presence of scavenging air introduction stroke and scavenging air exhaust stroke so as to realize a higher compression ratio than that is obtainable by any of four-cycle engines, thereby resulting in the improved fuel combustion. In order to stably operate an A/F sensor to detect oxygen density in the exhaust gas, the six-cycle engine cited in the above patent publication 1 was provided with a couple of exhaust ports: one was for exhausting combusted gas and another for exhausting scavenging gas. However, practically, reaction rate of the catalyst sensor was not quite fast, causing only a mean value of the oxygen density detected, therefore there was not any critical problem. Conversely, combusted gas remaining in the fuel combustion chamber mixes with the scavenging air, causing a problem of which the combusted gas is discharged without post treatment. Hence, as in the conventional six-cycle engine cited in the above patent publication 1, the present invention takes measures to discharge the whole of exhaust gas and the scavenging exhaust gas via a catalyst. The present invention further controls valve aperture degree of the scavenging port to solve the problems of increased temperature and excess of oxygen in the catalyst both of which caused by the above measures.

When only one exhaust port is provided, it will cause the exhaust gas to mix with the scavenging air, causing lowering temperature of an exhaust catalyst thus leading to the difficulty in activation of the catalyst. This problem can be solved by preserving temperature of the exhaust gas emitted from the six-cycle engine. Concretely, not only for the fuel combustion chamber, but also inner wall of the exhaust port including the catalyst is insulated with heat insulating material in order to maintain temperature of the exhaust gas. In this case, since temperature of the exhaust catalyst tends to excessively rise, sufficient care should be taken to secure a cooling means for properly adjusting the temperature thereof. The present invention provides a proper cooling means for adjusting temperature of the exhaust catalyst.

Likewise, when scavenging air is composed of fresh air, catalytic material bears excessive oxygen. This may cause inactivation of reductive action of the catalyst. To cope with this problem, in case of four-cycle engines, measures has been taken such as increasing amount of fuel injection and providing an "Exhaust Gas Recirculation" (EGR) system to circulate exhaust gas to intake air. Conversely, in the case of the six-cycle engine, scavenging air remains even after fuel combustion, leading to the problem of excess of oxygen persisting even if introducing the above systems Further, other problems arise such as presence of the scavenging air obliges the dimension of the above EGR system to be enlarged and the process for warming up this system inevitably consumes a longer time.

The term "Direct Injection Type Engine" specifically cited in the present invention collectively refers to the compression ignition engines such as diesel engines and the spark ignition engines that directly inject fuel such as gasoline into cylinders. Further, generally, the first and second valves include the butterfly valves or the slide valves used as throttle valves that are set to suction and scavenging ports. However, in the present invention, suction and scavenging poppet valves are also included, where the suction and scavenging poppet valves respectively operate with a continuously variable valve timing mechanism that continuously controls the open angle and the lifting height of the above valves against the rotations of the engine cranks. By providing the first and second valves with the continuously variable valve timing mechanism, when restricting the gas inflow rate in the suction and scavenging stroke, the above mechanism eliminates the pressure decline inside the first and second valves, thereby reducing the pumping loss. Hence, any of the six-cycle engines incorporating the above mechanism enhances the fuel combustion efficiency.

The first means for solving problems consists of a premix combustion type six-cycle engine comprising: a first valve and a fuel supplying device disposed in a suction port; and a second valve disposed in a scavenging port, each of the first and second valves including means for operating in linkages with an accelerating operation and another means for relatively varying the aperture degrees of the first and second valves via operation of an actuator.

The second means for solving problems consists of a direct injection type six-cycle engine comprising: a first valve disposed in a suction port; a second valve disposed in a scavenging port, each of the first and second valves including means for operating in linkages with an accelerating operation and another means for relatively varying the aperture degrees of the first and second valves via operation of an actuator; and a system for totally substituting scavenging air with circulating exhaust gas.

The third means for solving problems consists of the six-cycle engine according to the first means for solving problems, comprising a system for totally substituting scavenging air with circulating exhaust gas.

The fourth means for solving problems consists of the six-cycle engine according to the first means for solving problems, comprising a suction valve and a scavenging valve both opened in a suction stroke.

The fifth means for solving problems consists of the six-cycle engine according to Claim 2, comprising a mechanism for opening a suction valve in a scavenging air introducing stroke, said mechanism further continuously varying the open angle of said suction valve in the scavenging air introducing stroke.

The sixth means for solving problems consists of a valve controlling system for the six-cycle engine according to the first to fifth means for solving problems comprising means for sensing actual temperature of an exhaust catalyst itself and means for driving an actuator that relatively controls the aperture degrees of the first valve and the second valve in accordance with the actual temperature of the exhaust catalyst.

The seventh means for solving problems consists of the six-cycle engine according to Claims 1 to 5, comprising a variable valve timing mechanism disposed in an exhaust valve, said variable valve timing mechanism including: the normal mode to open the exhaust valve during an exhaust stroke and a scavenging air introducing stroke; and the warm-up mode to open the exhaust valve during the exhaust stroke, the scavenging air introducing stroke and a scavenging air exhausting stroke, said modes being capable of shifting itself between the normal mode and the warm-up mode.

The eighth means for solving problems consists of a valve controlling system having a computer for the variable valve timing mechanism built in the six-cycle engine according to the seventh means for solving problems, said computer comprising means for sensing actual condition of the exhaust catalyst and means for driving an actuator to vary the open angle of the exhaust valve of the variable valve timing mechanism.

The ninth means for solving problems consist of the six-cycle engine according to the first to fifth means for solving problems, comprising: a scavenging port valve that is disposed on the upper stream side of the scavenging port independently of the second valve; and an independent port that is disposed between the scavenging port valve and the second valve so as to enable an exhaust port to circularly supply exhaust gas thereto.

The tenth means for solving problems consists of a valve controlling system having a computer for the scavenging port valve of the six-cycle engine according to the ninth means for solving problems, said computer comprising means for sensing the actual condition of the exhaust catalyst, means for sensing aperture degree of the first valve, and means for driving an actuator to vary the aperture degree of the scavenging port valve.

The first means for solving problems according to the present invention has an advantage of properly controlling temperature of exhaust gas emitted from a premix combustion type six-cycle engine. For example, when temperature of an exhaust catalyst remains low, aperture degree of the second valve is narrowed relatively to the aperture degree of the first valve for a normal load so as to decrease the scavenging air rate. Whenever necessary, the second valve is closed. In this way, it is possible to decrease the scavenging air rate, raise the temperature of exhaust gas and the exhaust catalyst. This action is also effective for contracting the time required for warming up the engine and raising the catalyst temperature faster. Conversely, if the temperature of the exhaust catalyst remains high, relatively increasing the aperture degree of the second valve can raise the proportion of the scavenging air and lower the temperature of the exhaust gas and the catalyst. Concurrently, resistance in the exhaust path is decreased in the scavenging air introducing stroke, thereby decreasing the pumping loss. This is because the aperture degree of the second valve can be controlled independently of the first valve although the second valve operates in association of the first valve that serves as the throttle valve for control of exhaust temperature. This can be done because, unlike the first valve that affects the amount of intake air, the opening and closing operations of the second valve hardly affect the engine output power.

The second means for solving problems according to the present invention provides a further advantage by way of solving problems that cause the exhaust catalyst built in the direct injection type six-cycle engine to bear excessive volume of oxygen so as to properly control temperature of the exhaust gas. The second means properly controls temperature of the catalyst via the same method as adopted for the first means for solving problems. Generally, circulating exhaust gas is subject to a cooling process before being used as scavenging air. Compared to the process for uniformly mixing circulative gas without discriminating between suction air and scavenging air, oxygen density of suction air remains invariable, thereby amount of fuel supply being not required to decrease. In this way, it becomes possible to properly control temperature of catalyst without lowering the output power. Unlike the Exhaust Gas Recirculation for a four-cycle engine, the second means for solving problems basically substitutes the whole scavenging air with the circulating exhaust gas. Although the volume of circulating gas increases, the structure is thus quite simple. More accurate control of oxygen density is done by properly adjusting the fuel injection volume against the volume of fresh air contained in the suction and scavenging air. When deemed necessary, in the same way as the conventional four-cycle engine, circulation gas is also supplied to the suction air.

In the same way as the second means for solving problems, the third means for solving problems according to the present invention provides an advantage in decreasing excess of oxygen in the exhaust catalyst without lowering the output power by properly substituting scavenging air inside a premix combustion type six-cycle engine with circulating exhaust gas.

The fourth means for solving problems according to the present invention also provides an advantage of enhancing the maximum output power of the six-cycle engine. In the course of introducing scavenging air, only the scavenging valve is opened to introduce scavenging air filled with fresh air into the cylinders. In the course of suction of air, air-fuel mixture from the suction port and scavenging air from the scavenging port are simultaneously introduced into cylinders and mixed with each other therein. In the course of suction process, independently of the suction gas volume from the suction port, densely concentrated air-fuel mixture containing fuel proportional to the sum comprising suction air and scavenging air are introduced to the cylinders so as to generate appropriate air-fuel mixture inside cylinders. This mechanism makes it possible to contract area of the suction valve and relatively expand area of the scavenging valve. For this reason, the premix combustion type engine embodied by the fourth means for solving problems makes it possible to expand the area of the valve aperture during the introduction of scavenging air stroke to be equal to that of the suction valve of four-cycle engine with two valves. Further, during the suction stroke that most affects the output power, gas is introduced via the suction valve and the scavenging valve, thereby making it possible to provide the overall valve aperture area in excess of that of a four-cycle engine with two valves. These measures make it possible to realize actual rotational number beyond that is achievable by any of the four-cycle engines. Larger area of the valves also makes it possible to effectively lower the resistance of gas passages of valves and minimize pumping loss as well.

The fifth means for solving problems according to the present invention is the "self EGR system" comprising a simple structure capable of simultaneously executing control over the temperature of the exhaust catalyst and the oxygen density of the direct injection type six-cycle engine. Further, the fifth means is also advantageous due to compact configuration of the external EGR system and the scavenging means. Since any of conventional engines mounted on automobiles is rarely driven at the maximum output power, it is not practical to provide automobiles with the EGR system having own capacity enough for the maximum output power. When the engine is driven at a low rotational number, scavenging air mainly composed of circulative exhaust gas is introduced mainly via the scavenging port. However, while the engine is driven with a higher rotational number, fresh air enough to suffice the shortage is further introduced via the suction valve. This method makes it possible to compactly build the scavenging port and valve to enable the dimensions of the air-suction valve and exhaust valve to be expanded relatively, thereby increasing the engine output power and minimizing pumping loss. Further, the smaller setting volume of circulating exhaust gas makes it possible to compactly configure the external EGR system, especially the cooling system thereof. When a higher engine output is provisionally required, fresh-air with lower temperature is introduced via the air-suction valve to cool off the combustion chamber. In this case, since the engine is driven with a high output power, there is no fear of causing temperature of the exhaust catalyst to be lowered excessively. Although the oxygen density may provisionally become too high, condition of catalyst can be adjusted by increasing air-fuel mixture ratio when engine output lowers next time.

The sixth means for solving problems according to the present invention advantageously provides a system that automatically and properly adjusts actual temperature of catalyst by initially sensing actual temperature of the exhaust catalyst, followed by actuating the actuator to vary the aperture degrees of the first and second valves relatively.

The seventh means for solving problems according to the present invention advantageously realizes an internal EGR system with a simple configuration, which directly introduces a large volume of exhaust gas from the exhaust port in the introduction of scavenging air stroke into the fuel combustion chamber and then varies the volume thereof. Further, by combining the internal EGR system with the controlling system, the seventh means provides further advantages of automatically controlling actual temperature of the catalyst and the actual density of oxygen contained therein as well as warming of the engine being accelerated. When a premix combustion type four-cycle engine admits fresh air, circulating a large volume of exhaust gas via the exhaust port without cooling off it will cause the exhaust gas bearing an extremely high temperature to contact with air-fuel mixture, leading to failures such as backfire phenomenon. However, in the case of the six-cycle engine, only the scavenging air devoid of fuel comes into direct contact with the exhaust gas, thereby enabling to generate the above advantageous function.

A six-cycle engine admits fresh air and scavenging air consisting of cooled circulating exhaust gas into the fuel combustion chamber via the scavenging port during the introduction of scavenging air stroke, thereby cooling off the interior of the fuel combustion chamber. However, compressive ratio has previously been set in anticipation of the critical case of the driving condition to enable the engine mechanism to be normally operable all the time, thus, not only during the cooled-off condition, but also even after being warmed to some extent, there may be such a case in which there is a less need to cool off the engine with a scavenging air, which depends on the actual temperature, actual load, and the loaded duration. The above seventh means for solving problems has been invented upon considering that it is not always necessary to fully cool off the circulating exhaust gas.

The eighth means for solving problems provides a further advantage by way of securing a system that is capable of maintaining proper condition of the exhaust catalyst via a process for sensing several conditions such as temperature of the exhaust catalyst and the density of oxygen to automatically control the volume of the circulating exhaust gas emitted from the exhaust port during the introduction of scavenging air stroke.

The ninth means for solving problems according to the present invention provides an advantage of varying the volume of fresh air and the volume of circulating gas from an external EGR relatively to scavenging air by properly controlling the aperture degree of the second valve and the scavenging port valve via a simple system. The ninth means has a further advantage because temperature of the catalyst and density of oxygen can be adjusted by way of combining the above means with an automatically controlling system. In particular, when being combined with the fifth means for solving problems, the ninth means for solving problems makes it possible to vary the ratio between the volume of circulating exhaust gas emitted from the exhaust valve via the EGR (Exhaust Gas Recirculation) process and the volume of the scavenging air, thereby advantageously accelerating the warming-up of the engine and precisely controlling actual temperature of the exhaust gas.

The tenth means for solving problems according to the present invention provides a further advantage of properly maintaining temperature of catalyst and density of oxygen. This can be done by sensing actual conditions of temperature of the exhaust catalyst and the density of oxygen contained therein to automatically control the aperture degrees of the second valve and scavenging port valve and adjust the ratio of the circulating volume of exhaust gas contained in the scavenging air via the external EGR process to fresh air.
FIG. 1 is a plan view of a portion of a cylinder head built in a multi cylinder premix combustion type six-cycle engine according to the first means for solving problems as viewed from the piston side, which will be described in the first embodiment for implementing the present invention;
FIG. 2 is a lateral view of the same as above (the above-referred cylinder head according to the first embodiment for implementing the present invention);
FIG. 3 is a chart illustrating the continuously variable valve timing driving system serving as the first and second valves according to the second embodiment for implementing the present invention;
FIG. 4 is a chart illustrating the EGR (Exhaust Gas Recirculation) system built in the direct injection type six-cycle engine according to the second means for solving problems based on the third embodiment for implementing the present invention;
FIG. 5 is a plan view of a cylinder head built in a six-cycle engine used in the first embodiment as viewed from the piston side according to the fourth means for solving problems, which will be described in the fourth embodiment for implementing the present invention;
FIG. 6 is a plan view of a cylinder head built in a six-cycle engine used in the second embodiment as viewed from the piston side according to the fourth means for solving problems, which will be described in the fifth embodiment for implementing the present invention;
FIG. 7 is a chart illustrating the EGR (Exhaust Gas Recirculation) system built in the six-cycle engine according to the fifth means for solving problems, which will be described in the sixth embodiment for implementing the present invention;
FIG. 8 is a chart illustrating the continuously variable valve timing driving system built in the suction valve of the six-cycle engine, which will be described in as the sixth embodiment for implementing the present invention;
FIG. 9 is a cross-sectional view of a cam shaft for driving the exhaust valve used in the first embodiment according to the seventh means for solving problems, which will be described in the seventh embodiment for implementing the present invention;
FIG. 10 is a graphic chart illustrating the pre-set accelerating velocity and the valve-lifting height against the rotational angle of crank of the cam shown in FIG. 9;
FIG. 11 is a chart illustrating the exhaust valve driving system according to the second embodiment according to the seventh means for solving problems, which will be described in the eighth embodiment for implementing the present invention;
FIG. 12 is a chart illustrating the valve controlling system that applies the sixth, eighth, and the tenth means for solving problems, which will be described in the ninth embodiment for implementing the present invention;
FIG. 13 is a flowchart for controlling operation of the actuator 93 according to the sixth means for solving problems, which will be described in the ninth embodiment for implementing the present invention;
FIG. 14 is a map illustrating aperture degree of the second valve relative to aperture degree of the first valve according to the sixth means for solving problems, which will be described in the ninth embodiment for implementing the present invention;
FIG. 15 is a map illustrating the method of controlling the exhaust valve according to the eighth means for solving problems, which will be described in the ninth embodiment for implementing the present invention; and
FIG. 16 is a map illustrating the method of controlling the scavenging port valve according to the tenth means for solving problems, which will be described in the ninth embodiment for implementing the present invention.

### Reference Numerals

- 1:: Six-cycle engine
- 16:: Fuel feeding device
- 17:: Ignition plug
- 18:: Direct injection type injector
- 20:: Cylinder head
- 20A, 20B, 20C:: Receptors for inserting poppet valve formed in the cylinder head unit
- 21:: Suction port
- 22:: Suction valve
- 23:: The first valve
- 24:: A sensor for sensing aperture degree of the first valve
- 31:: Exhaust port
- 32:: Exhaust valve
- 41:: Scavenging port
- 42:: Scavenging valve
- 43:: 43: The second valve
- 43B:: Scavenging port valve
- 52:: Rotational number sensor
- 63:: Exhaust catalyst
- 68:: Catalyst sensor
- 81/82:: Lever
- 83/84:: Rod
- 85:: Link
- 91/91B:: Actuator
- 92:: Actuator rod
- 93:: Exhaust valve actuator
- 94:: Scavenging port valve actuator
- 111:: Circulation port
- 112:: Circulating gas cooling unit
- 120:: Suction valve timing cam shaft
- 121/121B:: Suction cam
- 123, 123B, 133, 143:: Controlling shaft
- 124, 124B, 144:: Rod
- 126, 126B, 136, 146:: Rocker arm
- 126CF, 136CF, 146CF:: Cam follower
- 127, 137, 147:: Valve lifter
- 127RA:: Rush adjuster
- 127SH, 137SH:: Valve lifter shaft
- 128, 128B, 148:: Locker arm shaft
- 129, 129B, 149:: Locker arm holder
- 130:: Exhaust valve timing cam shaft
- 131:: Normal cam
- 131B:: Exhaust cam
- 132:: Warm up cam
- 132B:: Scavenging cam for the exhaust valve
- 138:: Eccentric wheel
- 139:: Spring pin
- 141:: Scavenging normal cam
- 510:: Accelerating pedal
- 610:: Controlling computer

The present invention provides a single exhaust port for the six-cycle engine, wherein the exhaust gas and scavenging exhaust gas are totally subject to passage through the exhaust catalyst. Further, in order to deal with a problem of lowering temperature of the exhaust catalyst, the temperature is controlled via thermal insulation of combustion chamber and exhaust system and adjustment of the relative aperture degree of the valve of the scavenging port against the valve of the suction port. To deal with a problem of causing the exhaust catalyst to be saturated with an excessive volume of oxygen, the invention has solved the problem by using the EGR system that fully substitutes the scavenging air with circulating exhaust gas. Further, to deal with a problem of causing the EGR system to be enlarged itself and another problem of requiring much time for warm up, a self EGR system has been provided to enable the exhaust valve to open itself in the introducing of scavenging air stroke.

### [First Embodiment]

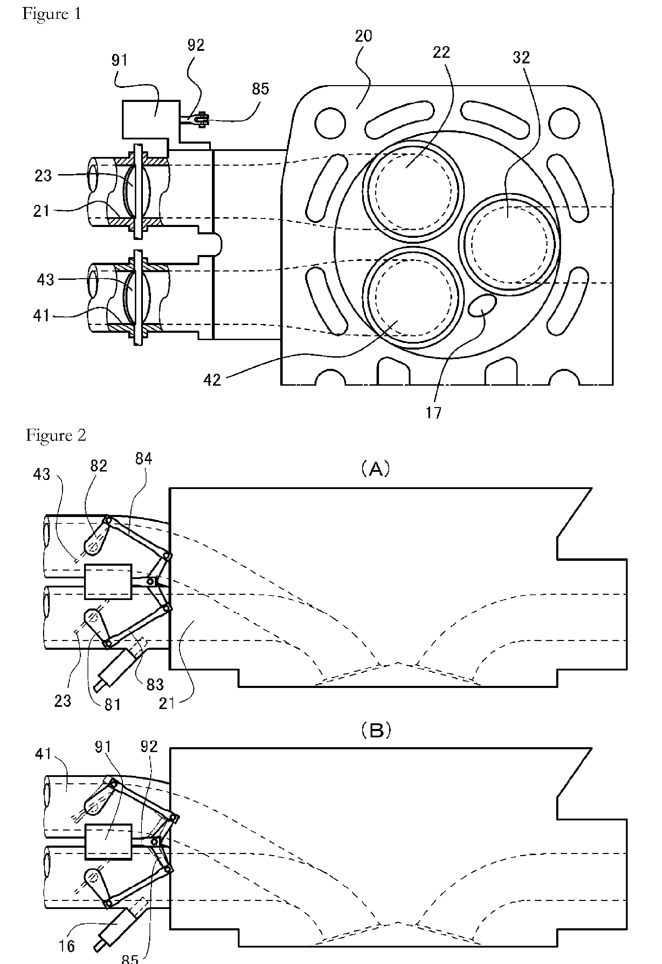

The multi cylinder premix combustion type six-cycle engine shown in FIG. 1 is provided with three kinds of valve in the fuel combustion chamber, including a suction valve 22, an exhaust valve 32, and a scavenging valve 42. An ignition plug 17 is disposed at a position apart from the center so that the above valves can respectively share a wider area. A suction port 21 and a scavenging port 41 are independently disposed. A fuel feeding device 16 is linked with the suction port 21 so as to feed air-fuel mixture to the fuel combustion chamber, whereas fresh scavenging air is led from the scavenging port 41. The first valve 23 functioning as the butterfly valve is secured to the suction port 21, whereas the second valve 43 having the configuration identical to that of the first valve 23 is secured to the scavenging port 41, where the first valve 23 and the second valve 43 are respectively secured to an independently rotating shaft.

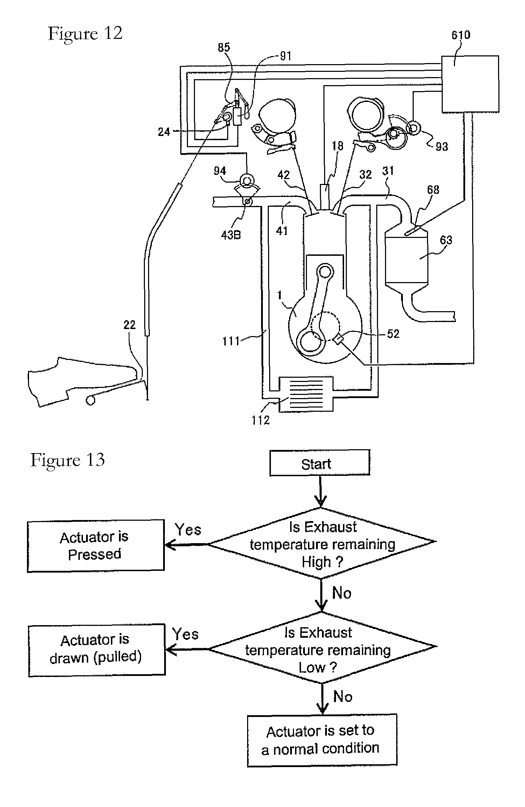

FIG. 2 is a lateral view of a cylinder head 20 as viewed from the upper side of FIG. 1. FIG. 2 illustrates operations performed in the periphery of the link of the first and second valve controlling systems. Generally, as shown in FIG. 12, in a movable body such as an automobile, by stamping the accelerator pedal or turning the throttle grip that is linked with the throttle valve disposed in the suction port of the engine, the built-in engine is actuated in the direction of opening the throttle valve. In the first practical embodiment of the present invention, the six-cycle engine is also provided with a similar linkage mechanism (not shown) to actuate the first valve 23 corresponding to the throttle valve in response to the actuating operation performed by a driver. Further, the second valve 43 is linked with the first valve via a lever 81, a rod 83, a link 85, another rod 84, and another lever 82. An actuator 91 is driven to externally vary the protruding amount of another rod 92 in response to actual temperature of exhaust gas. While the exhaust catalyst bears an appropriate temperature, the actuator 91 remains in a condition shown in FIG. (A), and then, the second valve 43 opens itself to the same aperture degree as the first valve 23. When the detected value of temperature of the exhaust gas rises (or when it is anticipated that temperature of the exhaust catalyst will rise), as shown in FIG. (B), the actuator 91 is actuated to push a rod 92 that supports the fulcrum of a link 85. In response to this action, the rod 84 moves in the direction of opening the second valve 43 from the position of the two-dot chained line so as to feed more scavenging air. Conversely, when the detected value of temperature of the exhaust gas is lowered (or when it is anticipated that temperature of the exhaust catalyst will lower), the rod 92 of the actuator 91 retracts itself to cause the second valve 43 to be closed relatively to the first valve 23, thereby causing the second valve 43 to be operated so as to introduce less scavenging air therein.

The first means for solving problem according to the present invention is not limited to such a case where the valve linked with the accelerator pedal and the throttle grip is the first valve 23. It is apparent to those skilled in the art that similar effect can be achieved even when a throttle valve is disposed against the whole suction port and scavenging port, and in addition, even when disposing another valve that can be opened and closed by an actuator on the part of a down-stream side suction port or scavenging port. Further, it is also allowable to provide an actuator that can directly operate the second valve in place of the linkage mechanism in order to operate the actuator in conjunction with the movement of the first valve via an electronic controlling means. The above arrangement is also included in the inventive conception of the first means for solving problems.

### [Second Embodiment]

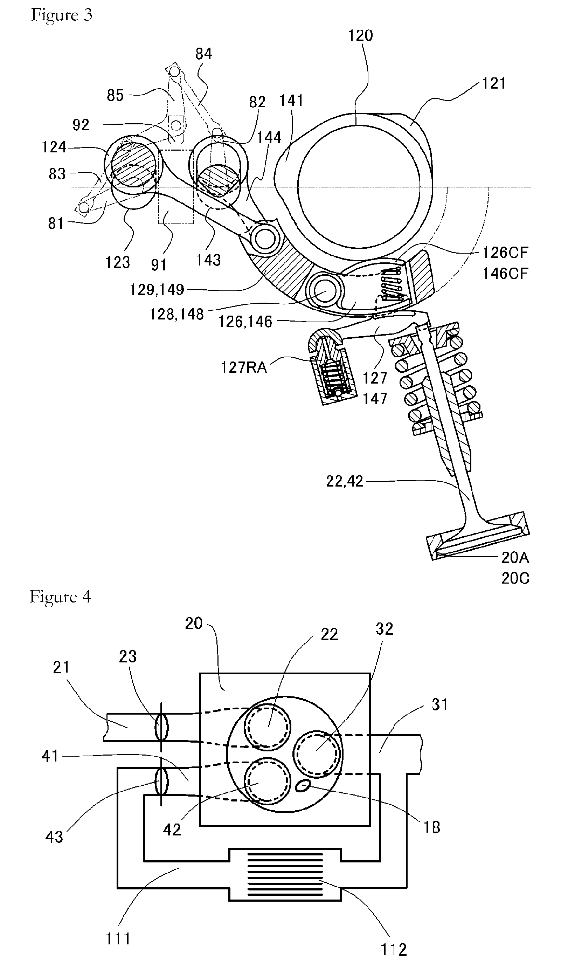

FIG. 3 illustrates the inventive valve driving system provided for the six-cycle engine based on the first means for solving problems, where the valve driving system uses a continuously variable valve timing system for the suction valve (as the first valve) and the air scavenging valve (as the second valve). The cylinder head has been omitted from FIG. 3. The suction valve 22 and the scavenging valve 42 are configured with dimensions being equal to each other. The scavenging valve is shown in the nearer side from viewers. In FIG. 3, component parts (126 to 129) of the suction variable valve timing mechanism including the scavenging valve are shown in the state overlapped with the component parts for scavenging. When adopting the continuously variable valve timing system into the scavenging valve and the suction valve, pressure at the valve portion can be prevented from lowering, making it possible to dispense with pumping loss, thus, fuel combustion efficiency can be increased for the partial load conditions in which volume of inflow of intake air and scavenging air must be limited. Not only for the premix combustion type engines, but the effect for minimizing pumping loss is also achievable with the direct fuel injection engines. Further, since operators are free from using care with the pumping loss, there is no need to apply the lean burn in which combustion speed is low. Therefore it is quite effective for economizing the combustion cost by faster combustion.

The continuously variable valve timing mechanism applied to the suction valve 22 and the air scavenging valve 42 are individually provided with a couple of crank-shaped controlling shafts 123 and 143, which are further provided with a link mechanism 85 etc. shown in FIG. 3 with a two-dot chained line as shown in the first practical embodiment. The continuously variable valve timing mechanism is capable of relatively controlling aperture degrees of valves by operating the actuator 91. In this embodiment, the above-cited controlling shaft and the cam shaft are disposed on the upper surface of the cylinder head shown with the two-dot chained line. When the exhaust catalyst bears an appropriate temperature, the actuator 91 enters into the state shown in FIG. 3. The suction valve 22 and the scavenging valve 42 are respectively operated by the link mechanism being linked with both valves so as to provide proportional valve aperture degree. The actuator 91 is driven so as to externally vary the protruding amount of the rod 92, and then properly adjusts the aperture degree of the scavenging valve relatively to the aperture degree of the suction valve.

In the above continuously variable valve timing mechanism, cams 121 and 141 are respectively provided for the corresponding valve mechanism for a common cam shaft 120. Further, locker arms 126 and 146 provided with cam followers 126CF and 146CF are respectively installed for the cams 121 and 141. By operating valve lifters 127 and 147 that individually swing in linkage with the swinging movement of the above locker arms 126 and 146, each valve is pushed and opened. Each of the continuously variable valve timing mechanism employs rotation of each control shaft to move the locker arms 126 and 146 with locker arm holders 129 and 149 along the arc-shaped guide formed by the cylinder heads shown by the two-dot chained line through the rods 124 and 144 in the rotating direction of the cams. This movement makes it possible to change the positions of the cam followers relative to the rotating angle of the cams, the opening/closing timing of the above valves, and the point of action relative to the valve lifters, thereby changing the amounts of valve lift.

The cam shaft according to the practical embodiment of the present invention is rotated in the counterclockwise direction. By stamping the accelerator pedal, the shaft 123 for controlling the suction valve corresponding to the first valve of the mounted internal combustion engine is rotated in the counterclockwise direction, forcing the shaft 123 to be rotated in the direction of expanding the aperture of the valve. FIG. 3 illustrates an actual condition in which the accelerator pedal has been stamped to the maximum position where the valve lifting height has become maximum. When the operator eases up on the accelerator pedal, the controlling shaft 123 and 143 are rotated in the clockwise direction against the drawing. As a result, the locker arms 126 and 146 respectively shift to the right. This in turn causes the locker arms 128 and 148 being the swinging center of the locker arms 126 and 146 to respectively approach the point of action for the valve lifters to cause the valve-lifting height to decrease. Concurrently, the valve opening/closing timing is advanced. The head portion of each poppet valve has the receptors 20A and 20B formed in the cylinder head. When the valve heads remain in the receptors, the aperture area remains 0 to cause the aperture area of the valve to be opened quickly.

The continuously variable valve timing mechanism according to the second practical embodiment is capable of simultaneously varying the open angle and the timing solely via rotations of the controlling shafts 123 and 123B. Since the force applied to the locker arms is opposite to each other, the applied forces substantially cancel the opposite force to minimize the supporting torque. Hence, it is possible to operate the continuously variable timing mechanism in conjunction with the operating system in the same way as the throttle valve. Even when operating the continuously variable timing mechanism with the actuator via the electronic controlling system, this can be executed by applying less driving force.

### [Third Embodiment]

FIG. 4 is a conceptual diagram of the EGR system built in the direct injection type three-valve six-cycle engine according to the second means for solving problem. The cylinder heads 20 are illustrated as seen from the piston side. The EGR system according to the present embodiment has an exhaust gas circulating port 111 for circulating exhaust gas from an exhaust port 31 to a scavenging port 41. The exhaust gas circulating port is equipped with a cooling unit 112 that cools off the exhaust gas. In the introduction of scavenging air stroke, cooled circulating exhaust gas is introduced from the scavenging valve 42. In the suction stroke, fresh air is introduced from the suction valve 22. In the present embodiment, the first valve 23 and the second valve 43 respectively act themselves in the same way as in the first embodiment. When a high degree of temperature has been detected from the exhaust gas, the second valve 43 opens itself relatively to the first valve 23. Conversely, when a low degree of temperature has been detected from the exhaust gas, the second valve 43 closes itself relatively to the first valve 23.

The six-cycle engine according to the third means for solving problem is the premix combustion type engine comprising a fuel feeding device disposed in the suction port according to the first means for solving problems.

### [Fourth Embodiment]

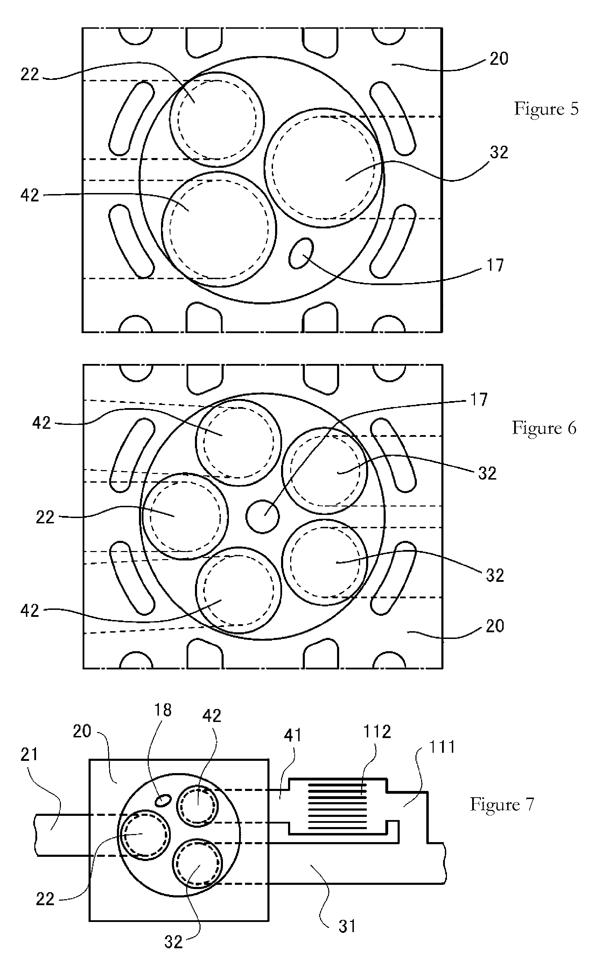

FIG. 5 is a plan view of the cylinder heads 20 provided for the premix type six-cycle engine according to the fourth means for solving problems as viewed from the piston side. In the present embodiment, the scavenging valve 42 and the exhaust valve 32 are configured with large dimensions, whereas the suction valve 22 is configured with relatively small dimensions. Air-fuel mixture is supplied from the suction port 21, whereas fresh air is supplied from the scavenging port 41 in the most cases. In the introduction of scavenging air stroke, only the scavenging valve 42 opens itself. In the suction stroke, the suction valve 22 opens itself simultaneously with the scavenging valve 42 so as to introduce air-fuel mixture and fresh air therein. A certain volume of fuel required for generating single round of explosion is injected into the suction port 21 with an air-fuel mixture with a density thicker than that is fed into any of normal engines. It is so arranged that the mixture is further mixed with the scavenging air fed from the scavenging valve 42 during the suction stroke and the compression stroke so as to fill the cylindrical interior with a predetermined premix condition. The fourth means for solving problems makes it possible to provide the area of the scavenging valve 42 to be wider than in the case of disposing the valves in the six-cycle engine according to the first embodiment. In particular, since the valve area in the course of suction that most affects the power output becomes the sum of the valve areas of the suction valve 22 and the scavenging valve 42, the valve area during the suction stroke exceeds that of the four-cycle engines, thus making it possible to realize the rotational number being equal to or beyond that is achievable by any of four-cycle engines. Although not being illustrated, the first valve and the second valve are also present in the fourth embodiment, thereby making it possible to properly adjust the air scavenging volume relative to the suction air.

### [Practical Embodiment 5]

FIG. 6 is a plan view of the five-valve cylinder head 20 according to the fourth means for solving problems as seen from the piston side. In the fourth embodiment, actual sizes of valves are substantially equal to each other. Total area of individual valves differs via the number of valves including two units of the scavenging valve 42, single unit of the suction valve, and two units of exhaust valves. Since individual valves are compactly configured, valves can be opened to full extent via a minimum lifting height, thereby enabling to raise the number of the rotation of the six-cycle engine.

### [Sixth Embodiment]

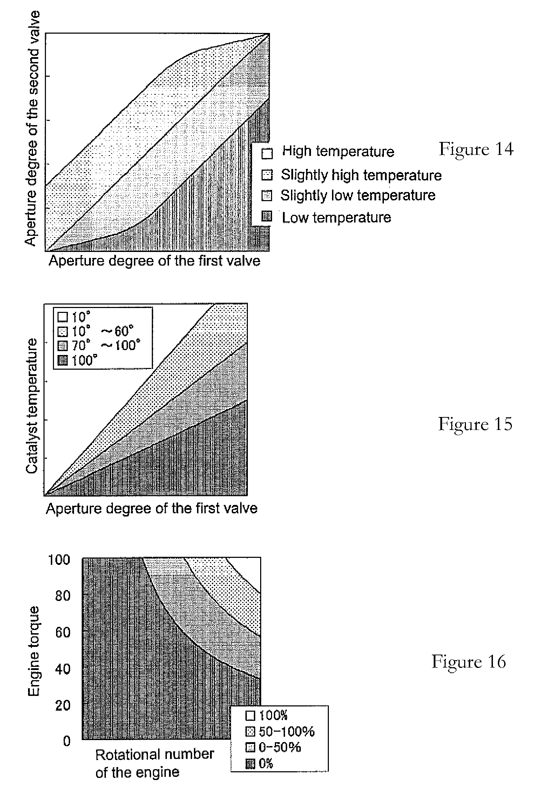

FIG. 7 is a plan view of the cylinder head 20 built in the six-cycle engine according to the fifth means for solving problem as viewed from the piston side and also an overall schematic view including the cylinder head 20. The scavenging valve 42 built in the six-cycle engine is configured to be smaller than the dimensions of the exhaust valve 32 and the suction valve 22, which is disposed adjacent to the exhaust valve 32. Circulating exhaust gas emitted from the exhaust port 31 is cooled off by a cooling unit 112 set to an exhaust circulating port 111, which is then led to the exhaust port 41, and then led into the fuel combustion chamber via the exhaust valve 32. The capacity of the EGR system provided for the present embodiment is so arranged that the capacity becomes short when the six-cycle engine outputs a high power. Hence, the EGR system is compactly configured due to the short capacity. When the six-cycle engine outputs low power, the suction valve does not open itself during the introduction of scavenging air stroke, but it admits scavenging air only from the scavenging valve. When the six-cycle engine outputs high power, the suction valve opens itself during the introduction of scavenging air stroke so as to feed fresh air into the fuel combustion chamber to compensate the shortage of the scavenging air. Concretely, the suction valve is open during the introduction of scavenging air stroke when the above engine is driven with a more than predetermined number of the revolution and a more than predetermined aperture degree of the throttle valve. The aperture degree is maximized at a point close to the maximum power output from the six-cycle engine. FIG. 16 illustrates a map for controlling the aperture degree of the suction valve during the introduction of scavenging air stroke.

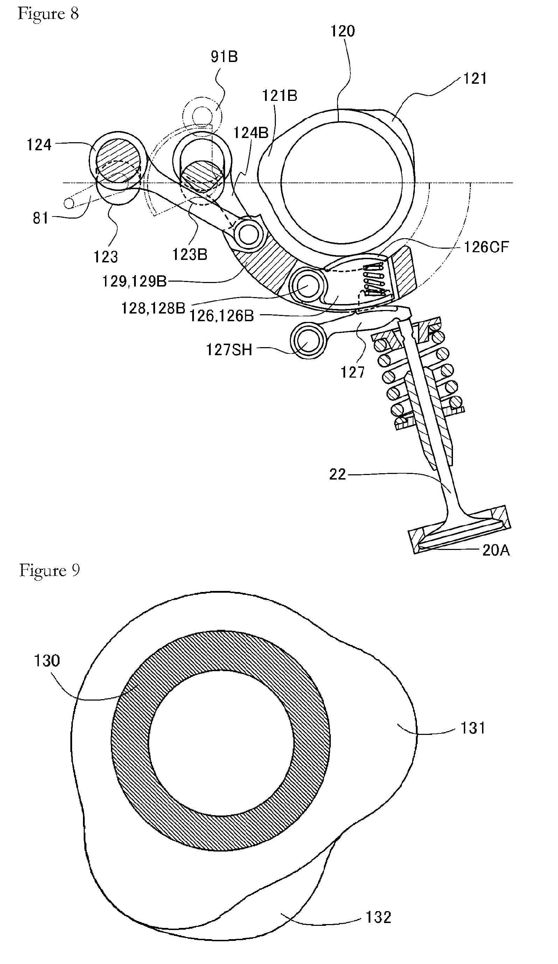

FIG. 8 is a schematic diagram of the continuously variable valve timing driving system for driving the suction valve according to the present embodiment. Although being similar to the system shown in FIG. 3, the system shown herein is provided with a valve lifter 127 that follows up a locker arm having a greater operative angle relative to a couple of locker arms 146 and 146B so as to solely drive the suction valve 22. The controlling shaft 123 varies the aperture degree of the suction valve 22 used as the first valve during the suction stroke. The controlling shaft 123B varies the aperture degree of the suction valve 22 during the introduction of air scavenging stroke. In the present embodiment, the controlling shafts 123 and 123B are not interlinked via the linking mechanism, but the shaft 123B is solely operated by an actuator 91B that is independently driven.

### [Seventh Embodiment]

FIG. 9 is a cross-sectional view of a cam shaft 130 built in the variable valve timing mechanism provided for the six-cycle engine according to the seventh means for solving problems. All the valve-driving cam shafts including the present cam shaft 130 make a full turn while the crank fully rotates three times. The 12 o'clock direction indicated by the cam shown in FIG. 9 corresponds to the top dead center point at which the piston starts off the explosion and expansion stroke, and the cam shaft 130 built in the six-cycle engine rotates in the counterclockwise direction. The cam shaft 130 is provided with two kinds of cam. The cam 131 shown on the front side in FIG. 9 is used for driving the exhaust valve 32 in the normal mode (hereinafter referred to as "normal-mode cam"). The cam 131 causes the exhaust valve 32 to be opened during the exhaust stroke and the scavenging air exhausting stroke. The other cam shown on the back of FIG. 9 is a warming-up cam 132, which causes the exhaust valve to be opened even when the introduction of scavenging air stroke is underway.

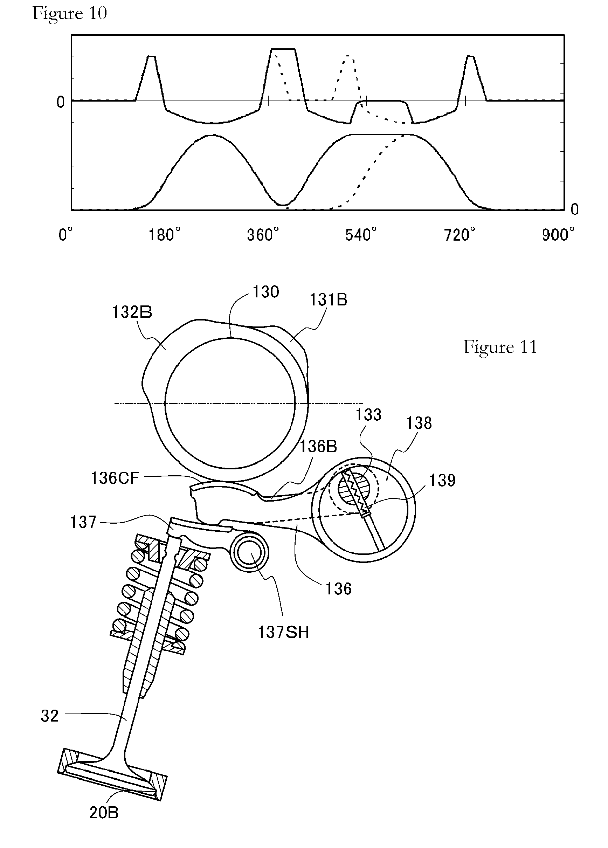

FIG. 10 is a graphic chart illustrating the accelerating rate and the valve lifting height of the exhaust valve relative to the rotating angle of the crank built in the six-cycle engine using the exhaust valve cam shaft according to the present embodiment. The longitudinal axis of the graph shown in the upper side shows the accelerating rate preset of the exhaust valve, where the acceleration rate in the direction of opening the exhaust valve is shown in a positive sign. The longitudinal axis of the graph shown in the lower side shows the valve-lifting height of the exhaust valve. The lateral axis designates the rotating angle of the crank. The crank makes a full turn for three times per cycle comprising six strokes. Of these, based on the point 0 degree that corresponds to the upper dead center of the piston that sets off the explosion/expanding stroke corresponding to the third stage stroke, a total of 900° of the crank angles covering a total of five stage strokes ranging from the third stage stroke of the explosion/expansion, discharge of exhaust gas, introduction of scavenging air, scavenging air exhausting, and the suction, up to the first stage stroke of the following cycle is designated by way of dividing 900° into 180° as a scaling unit.

The dotted line shown in FIG. 10 shows the preset accelerating velocity and the valve lifting curve of the normal cam 131 for the exhaust valve. There are buffering portions indicated by slightly tilted straight lines at the initial and ending portions of the valve lifting curve. The valve lifting movement is initiated at preset accelerating velocity of the valve at the ending point of the initial buffering portion. It is so arranged that the preset acceleration rate continuously lasts in a range below a certain accelerating rate. Due to continuity of the accelerating rate, as a whole, the valve lifting curve takes a mild curve. When analyzing the crank angle at the one-eighth height of the maximum valve lifting range, not only in the case of the exhaust stroke, but also in the case of the scavenging air exhausting stroke, the normal cam has a cam profile configured such that valve starts opening at 30° before the bottom dead center and closes at 5°after the top dead center, which comprises 215° degrees in total.

The preset accelerating rate and the valve lifting curve of the warming-up cam 132 according to the present embodiment are respectively set as shown via solid lines. The valve open angle of the warming-up cam in the exhaust stroke is identical to that of the cam for the normal mode. Clearance between the valve and the piston near the top dead center is the same as that of the normal cam. However, after passing the top dead center, unlike the normal cam, the valve does not seat onto the valve seat, but it resumes a lifting movement. When the valve exceeds the maximum cam lifting height set by the normal mode, the lifting height provisionally becomes constant. When the valve approaches the maximum cam lifting point during the scavenging air discharging stroke in the normal mode, the valve again accelerates own movement in the seating direction in same the manner as the normal cam until being seated in position. The warming-up cam always has the same lifting height as or a larger lifting height than the normal cam. This arrangement makes it possible to use the simplified variable valve timing mechanism as cited in the above-referred Japanese Patent Publication 2.

In the present embodiment, the minimum point of lifting the valve between a couple of cam peaks corresponds to the point at 26.5°after passing the top dead center of the angle of the crank after initiating the introduction of scavenging air stroke. Nevertheless, since the piston is apart from the valve at the bottom dead center, there is no need to close the valve and it makes it possible to maintain the valve lifting height at the maximum. Thus, it is possible to fully secure an optimum valve aperture degree during the introduction of scavenging air stroke, and yet, it is possible to expand the valve aperture rate during the introduction of scavenging air stroke. The expanded aperture degree of the valve reduces effectively the pumping loss.

### [Eighth Embodiment]

FIG. 11 is an overall schematic diagram of the continuously variable valve timing driving mechanism provided for the exhaust valve 32 built in the six-cycle engine according to the second embodiment that has introduced the seventh means for solving problems, in which illustration of the cylinder head is omitted. The above mechanism is provided with an exhaust cam 131B that opens the exhaust valve 32 during the exhaust stroke and a scavenging cam 132B that opens itself during the introduction of scavenging air stroke and the scavenging air discharging stroke, where the exhaust cam 131B and the scavenging cam 132B are secured to a cam shaft 130 that is rotated in the clockwise direction. The above continuously variable valve timing mechanism is provided solely for the scavenging cam 132B. An eccentric wheel 138 functioning as the fulcrum of the locker arm 136 is integrally rotated in conjunction with a controlling shaft 133 and a spring pin 139. Another locker arm 136B for the exhaust cam 131 is disposed in the inner location of the locker arm 136, where the fulcrum of the locker arm 136B is directly secured by a controlling shaft 133. Even when the controlling shaft 133 rotates, the fulcrum thus does not shift its position, thereby enabling the locker arm 136B to swing itself with no difference in the operating conditions at all. The above locker arms 136 and 136B both swing the valve lifter 137 so as to open the exhaust valve 32. Although not being illustrated, the locker arms 136 and 136B have a spring means for pressing a cam follower against the above cams.

FIG. 11 represents the state of warming up. In this condition, rotational angle of the controlling shaft 133 causes the aperture of the exhaust valve 32 to be maximized during the introduction of scavenging air stroke. By causing the controlling shaft 133 to be rotated in the clockwise direction, the fulcrum positions of the locker arms 136 and 136B are shifted in the rotating direction of the cam 132. This in turn delays the timing relative to the rotation of the cam 132 to further cause the timing for opening and closing the exhaust valve 32 to be delayed. Concurrently, by causing the position of the acting point for a valve lifter to be apart from a valve lifter shaft 137SH, swinging movement of the valve lifter decreases to cause the valve lifting height to be decreased. By causing the controlling shaft 133 to be rotated to the right shown in Fig. 11, the exhaust valve 32 that remained open itself during the introduction of scavenging air stroke and remained closed at the end of the scavenging air discharging stroke gradually retards the opening point so as to decrease the aperture degree in the introduction of scavenging air stroke. In the meantime, the exhaust valve 32 opens and closes itself in the exhaust stroke.

### [Ninth Embodiment]

FIG. 12 is an overall schematic diagram of the valve controlling system that has adopted the sixth, eighth, and the tenth means for solving problems. The six-cycle engine 1 according to the ninth embodiment is provided with the first and second valves, which individually correspond to the suction valve 22 and the scavenging valve 42 respectively equipped with a continuously variable valve timing mechanism shown in FIG. 3. The valve controlling system is further provided with a scavenging port valve 43B according to the ninth means for solving problems. The suction port is disposed on the opposite side of the scavenging port, which is not illustrated in FIG. 12. The exhaust valve is provided with the continuously variable valve timing driving system shown in FIG. 11. An exhaust gas circulating port 111 is disposed between the exhaust port and the scavenging port. A cooling device 112 is disposed at the port 111.

The controlling computer 610 comprises the following: the first valve aperture sensor 24 that is mounted to the control shaft of the first valve that is operated according to the accelerator pedal that driver operates, a means for receiving signal from a catalyst sensor 68 that senses temperature of exhaust gas and actual density of oxygen, and a means for driving an actuator 91 that controls relative aperture degrees of the first and second valves according to the actual exhaust condition. The catalyst sensor is disposed at a position at which the sensing delay rate of the sensor is substantially equal to the delay rate in the conditional variation of catalyst against the variation of exhaust gas. Delay in the sensing operation committed by the sensor is physically corrected. The controlling computer 610 is further provided with a sensor 52 that detects the actual number of the rotation of the six-cycle engine. The controlling computer 610 is further provided with a function that drives another actuator 94 that opens and closes valve 43B so as to provide the scavenging port with fresh air enough to suffice shortage of circulating exhaust gas needed for admitting scavenging air. The above controlling computer 610 is further provided with a function that drives another actuator 93 that causes the controlling shaft of the exhaust valve to be rotated.

FIG. 13 is an operational flowchart that illustrates control of drive of the actuator 91 according to the present embodiment. After completing a warming-up process, when the exhaust gas temperature value detected reaches an appropriate level, the actuator 91 is set to a normal position, where the first and second valves are respectively provided with a proportional aperture degrees. If a high temperature has been detected from the exhaust gas or if it is anticipated that temperature of the exhaust catalyst will rise, the actuator will push the controlling rod forward to cause the aperture degree of the second valve to increase relatively. If a low temperature has been detected from the exhaust gas, or if it is anticipated that temperature of the exhaust catalyst will lower, the actuator will pull the controlling rod so as to decrease the aperture degree of the second valve. Since the logic of the control is simple, it is not always necessary to use a computing means. For example, it is also practicable to control such a system that drives the actuator by applying thermally expansible fluid.

FIG. 14 is a graphical map that illustrates aperture degree of the second valve relative to that of the first valve in proportion to the value of the detected temperature of exhaust gas according to the present embodiment. Whenever executing an electronic controlling method, the present map is applicable in order that the second valve shall constantly remain within an operable range.

FIG. 15 is a controlling map that illustrates the practical timing for causing the exhaust valve 32 to be opened in response to the actual value of the detected temperature of the exhaust gas. The numerical angular values shown therein designates the crank angles to show the actual angular point at which the exhaust valve is opened from the bottom dead center of the piston that corresponds to the terminating point of the introduction of scavenging air stroke. Basically, when temperature remains below a predetermined degree, the open angle widens in the scavenging stroke. When temperature remains above a predetermined degree, the open angle is gradually decreased. When the first valve is closed, since it is not necessary to open the exhaust valve 32 during the introduction of scavenging air stroke, open angle is also decreased. Even when the open angle has the minimum value, the first valve is closed at a point corresponding to 10° after passing the bottom deal center in order to secure the valve lifting height in the scavenging stroke, The controlling computer 610 computes an operational target value of the actuator 93 via the present map for individually detected values to drive the actuator to an optimal position. Since the present embodiment applies the continuously variable valve timing mechanism, the valve aperture degree is continuously varied. In such a variable valve mechanism that switches the cam as shown in FIG. 9; however, when the aperture and temperature of the first valve exceed a predetermined line, a switching operation is executed to shift the warming-up cam over to the standard cam. In the present embodiment, oxygen density is adjusted by adjusting the fuel supplying volume. However, whenever opening the exhaust valve 32 in the course of admitting the scavenging air, the opening process is executed in consideration of the decrease of the volume of the scavenging air to be introduced equivalent to the volume of the incoming exhaust gas.

FIG. 16 illustrates a map for controlling the aperture degree of the scavenging port valve 43B for the detected value of the rotational number of the six-cycle engine and also against the engine torque according to the present embodiment. Initially, the controlling computer 610 estimates a practical torque by referring to the detected values of the engine rotational number and the aperture degree of the first valve. Next, the computer 610 reads the target aperture degree of the scavenging port valve from the map by referring to the engine torque and the detected value of the rotational number of the engine before driving the actuator 94 to a proper position. Basically, it is so arranged that the scavenging port valve 43B is opened in a range being short of scavenging air for the volume of circulating gas that can be supplied so as to admit fresh air being short. For this reason, the same effect can be achieved by detecting the decreased pressure of the scavenging port 41 to control the scavenging port valve to be opened. In the event where lowered density of oxygen of the catalyst generates reductive atmosphere or the temperature of the exhaust is excessively high, the controlling computer 610 executes a corrective operation in the direction to increasing the proportion of fresh air, in other words, in the direction to opening the scavenging port valve 43B.

It is reported that the six-cycle engines have been used for fuel consumption racing cars. The results evidenced that the six-cycle engines have high potentials in economy of fuel consumption. However, concrete details of the six-cycle engines used for the racing cars have not been disclosed to the concerned. On the other hand, the four-cycle engines have thus far been consummated technologically in the market. Compared to the four-cycle engines, it was anticipated that the six-cycle engines generates a less number of internal explosion in an identical number of the rotation, leading to lowering power output. Hence, there has been no sign of positive study thus far made so as to prepare a full-scale mass production of the six-cycle engines. Nevertheless, as a result of practical study, a variety of advantages cited below have been realized, which include the following:
1: Fuel consumption efficiency is improved because compression ratio can be increased,
2: Charging efficiency is improved because temperature inside the fuel combustion chamber of the six-cycle engine during the suction stroke is lower than that of the four-cycle engines,
3: Denser air-fuel mixture can be used because when the fresh-suction stroke is set off, scavenging gas remains in the fuel combustion chamber, in other words, oxygen still remains therein.

Due to the above reasons, it has become obvious that the six-cycle engine is essentially capable of generating an output power close to that can be generated by the four-cycle engines with the same displacement.

Further, the means for solving problems embodied by the present invention has successfully established various means for precisely controlling actual condition of built-in catalyst thus far being apprehensive. In consequence, all the apprehensive problems have fully been solved. In summary, the six-cycle engine according to the present invention is applicable to all the applications requiring fuel-economy internal combustion engines.

## Claims

1. A premix combustion type six-cycle engine comprising: a first valve and a fuel supplying device disposed in a suction port; and a second valve disposed in a scavenging port, each of the first and second valves including means for operating in linkages with an accelerating operation and another means for relatively varying the aperture degrees of the first and second valves via operation of an actuator.

2. A direct injection type six-cycle engine comprising: a first valve disposed in a suction port; a second valve disposed in a scavenging port, each of the first and second valves including means for operating in linkages with an accelerating operation and another means for relatively varying the aperture degrees of the first and second valves via operation of an actuator; and a system for totally substituting scavenging air with circulating exhaust gas.

3. The six-cycle engine according to Claim 1, further comprising a system for totally substituting scavenging air with circulating exhaust gas.

4. The six-cycle engine according to Claim 1, further comprising a suction valve and a scavenging valve both opened in a suction stroke.

5. The six-cycle engine according to Claim 2, further comprising a mechanism for opening a suction valve in a scavenging air introducing stroke, said mechanism further continuously varying the open angle of said suction valve in the scavenging air introducing stroke.

6. A valve controlling system for the six-cycle engine according to Claims 1 to 5, comprising means for sensing actual temperature of an exhaust catalyst itself and means for driving an actuator that relatively controls the aperture degrees of the first valve and the second valve in accordance with the actual temperature of the exhaust catalyst.

7. The six-cycle engine according to Claims 1 to 5, comprising a variable valve timing mechanism disposed in an exhaust valve, said variable valve timing mechanism including: the normal mode to open the exhaust valve during an exhaust stroke and a scavenging air introducing stroke; and the warm-up mode to open the exhaust valve during the exhaust stroke, the scavenging air introducing stroke and a scavenging air exhausting stroke, said modes being capable of shifting itself between the normal mode and the warm-up mode.

8. A valve controlling system having a computer for the variable valve timing mechanism built in the six-cycle engine according to Claim 7, said computer comprising means for sensing actual condition of the exhaust catalyst and means for driving an actuator to vary the open angle of the exhaust valve of the variable valve timing mechanism.

9. The six-cycle engine according to Claims 1 to 5, further comprising: a scavenging port valve that is disposed on the upper stream side of the scavenging port independently of the second valve; and an independent port that is disposed between the scavenging port valve and the second valve so as to enable an exhaust port to circularly supply exhaust gas thereto.

10. A valve controlling system having a computer for the scavenging port valve of the six-cycle engine according to Claim 9, said computer comprising means for sensing the actual condition of the exhaust catalyst, means for sensing aperture degree of the first valve, and means for driving an actuator to vary the aperture rate of the scavenging port valve.
